# FASCICULE DE BREVET EUROPEEN

(11) **EP 3 126 117 B1**
(45) Date de publication et mention de la délivrance du brevet: **07.06.2023**
(21) Numéro de dépôt: 15706893.3
(22) Date de dépôt: 05.02.2015
(51) Int. Cl.: B29C 49/06, B29C 49/78, B29C 49/54, B29K 67/00, B29C 49/12, B29C 49/48

(54) **PROCÉDÉ DE FABRICATION ET UNITÉ DE MOULAGE DE RÉCIPIENTS**
VERFAHREN UND GUSSFORM ZUR HERSTELLUNG VON BEHÄLTERN
METHOD AND MOULDING UNIT FOR PRODUCING CONTAINERS

(30) Priorité: 02.04.2014 FR 1452916
(43) Date de publication de la demande: 08.02.2017
(73) Titulaire: Sidel Participations, 76930 Octeville-sur-Mer (FR)
(72) Inventeur: DERRIEN, Mikael, F-76930 Octeville Sur Mer (FR); PROTAIS, Pierrick, F-76930 Octeville Sur Mer (FR)
(74) Mandataire: Sidel Group
(86) Numéro de dépôt international: PCT/FR2015/050273
(87) Numéro de publication internationale: WO 2015/150648

(56) Documents cités:
- EP-A1- 2 626 190
- WO-A1-2012/156638
- FR-A1- 2 966 374
- US-A1- 2011 204 067

## Description

L'invention a trait à la fabrication des récipients par soufflage d'ébauches en matière plastique tel que du polyéthylène téréphtalate (PET).

Ordinairement, un récipient comprend un corps, un fond fermant le corps à une extrémité inférieure de celui-ci, et un col qui s'ouvre à une extrémité supérieure du corps pour permettre le remplissage et la vidange du récipient.

Une technique classique de fabrication de récipients est le soufflage (éventuellement doublé d'un étirage au moyen d'une tige coulissante). Cette technique consiste à introduire l'ébauche (i.e. une préforme ou un récipient intermédiaire ayant subi une opération de préformage), préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule.

Il est connu, pour certaines applications, de former le récipient dans un moule muni d'un fond de moule mobile par rapport à la paroi entre une position rétractée dans laquelle le fond de moule est en retrait par rapport à la cavité, et une position déployée dans laquelle le fond de moule ferme la cavité. Initialement en position rétractée, le fond de moule est déplacé vers sa position déployée pendant le formage du récipient.

Cette technique, appelée boxage et décrite en détail dans la demande de brevet français FR 2 975 332 (Sidel Participations) ou son équivalent international WO 2012/156638, permet d'accroître le taux d'étirage de la matière et a pour double avantage de renforcer structurellement le fond et d'améliorer la prise d'empreinte de celui-ci.

Cependant cette technique est de mise en oeuvre délicate car elle repose sur des estimations quant à l'état instantané du récipient en cours de formage, en fonction notamment de la température de chauffe de la préforme, de la pression du fluide injecté et, le cas échéant, de la position instantanée de la tige d'étirage. Une initiation prématurée du boxage limite l'étirage de la matière et réduit les avantages de cette technique. A contrario, une initiation tardive fait apparaître un risque de pincement de la matière à l'interface entre la paroi du moule et le fond de moule, susceptible de créer sur le fond du récipient un bourrelet de matière inesthétique et nuisible à la stabilité du récipient.

Le document FR 2 975 332 précité propose d'initier l'opération de boxage avant l'opération de soufflage. Cette technique permet, certes, de minimiser les risques de pincement de la matière, mais est susceptible, dans certains cas (notamment pour les fonds aux formes complexes), de provoquer une prise d'empreinte imparfaite.

Il est également connu les documents de brevet publiés sous les numéros EP 2 626 190 A1 et FR 2 966 374 A1 qui décrivent des dispositifs et des procédés de formage de récipients.

Un objectif est par conséquent de proposer une solution permettant d'améliorer la prise d'empreinte des fonds des récipients, notamment de forme complexe.

A cet effet, il est proposé, en premier lieu, un procédé de fabrication d'un récipient à partir d'une ébauche en matière plastique, au sein d'un moule muni d'une paroi définissant une cavité à l'empreinte du récipient, et d'un fond de moule mobile par rapport à la paroi entre une position rétractée dans laquelle il s'étend en retrait par rapport à la cavité, et une position déployée dans laquelle il ferme la cavité, la paroi présentant, dans une partie inférieure, une ouverture définissant un passage pour le fond de moule, ce procédé comprenant :
- une phase d'introduction de l'ébauche dans le moule ;
- une phase de présoufflage comprenant l'injection dans l'ébauche d'un fluide sous pression à une pression dite de présoufflage,
- une phase de soufflage, consécutive à la phase de présoufflage, et comprenant l'injection dans l'ébauche d'un fluide sous pression à une pression dite de soufflage supérieure à la pression de présoufflage ;
- une phase de boxage comprenant le déplacement du fond de moule de sa position rétractée vers sa position déployée, la course de déplacement du fond de moule entre sa position rétractée et sa position déployée étant supérieure à 20 mm et inférieure ou égale à 60 mm,
l'ouverture présentant une extension axiale supérieure ou égale à 20 mm.

Il en résulte une meilleure prise d'empreinte du fond et un taux d'étirage supérieur, au bénéfice de l'esthétique et de la rigidité structurelle du récipient.

Diverses caractéristiques supplémentaires de ce procédé peuvent être prévues, seules ou en combinaison, dont notamment :
- la phase de boxage est initiée avant la phase de soufflage.

Il est proposé, en deuxième lieu, une unité de moulage pour la fabrication d'un récipient à partir d'une ébauche en matière plastique, cette unité de moulage comprenant :
- un moule muni d'une paroi définissant une cavité à l'empreinte du récipient, et d'un fond de moule mobile par rapport à la paroi entre une position rétractée dans laquelle il s'étend en retrait par rapport à la cavité, et une position déployée dans laquelle il ferme la cavité, la paroi présentant, dans une partie inférieure, une ouverture définissant un passage pour le fond de moule ;
- une butée basse de fin de course définissant la position rétractée du fond de moule, et une butée haute de fin de course définissant la position déployée du fond de moule, la course de déplacement du fond de moule définie par les butées étant supérieure à 20 mm, inférieure ou égale à 60 mm
l'ouverture présentant une extension axiale supérieure ou égale à 20 mm.

Diverses caractéristiques de l'unité de moulage peuvent être prévues, seules ou en combinaison :
- l'unité de moulage comprend un vérin muni d'un corps de vérin, d'un piston et d'une tige solidaire du piston et sur laquelle est monté le fond de moule, la tige et le piston étant solidairement mobiles par rapport au corps de vérin entre une position rétractée correspondant à la position rétractée du fond de moule, et une position déployée correspondant à la position déployée du fond de moule ;
- la butée basse est disposée en regard d'une face inférieure d'appui du fond de moule, pour un contact avec celle-ci en position rétractée ;
- la butée basse est formée du côté d'une face externe d'une paroi supérieure du corps de vérin ;
- la butée haute est disposée en regard du piston, pour un contact avec celui-ci en position déployée ;
- la butée haute est formée du côté d'une face interne d'une paroi supérieure du corps de vérin.

D'autres objets et avantages de l'invention apparaîtront à la lumière de la description d'un mode de réalisation, faite ci-après en référence aux dessins annexés dans lesquels :
- la figure 1 est une section d'une unité de moulage, en position rétractée du fond de moule ;
- la figure 2 est une section de détail, à échelle agrandie, de l'unité de moulage de la figure 1, dans la position rétractée du fond de moule ;
- la figure 3 est une vue similaire à la figure 2, montrant l'unité de moulage dans la position déployée du fond de moule ;
- la figure 4 est un diagramme comprenant deux courbes illustrant respectivement les variations de la pression dans le récipient en cours de formage dans l'unité de moulage et la position correspondante du fond de moule ;
- les figures 5, 6 et 7 sont des sections montrant trois fonds de récipients de formes différentes.

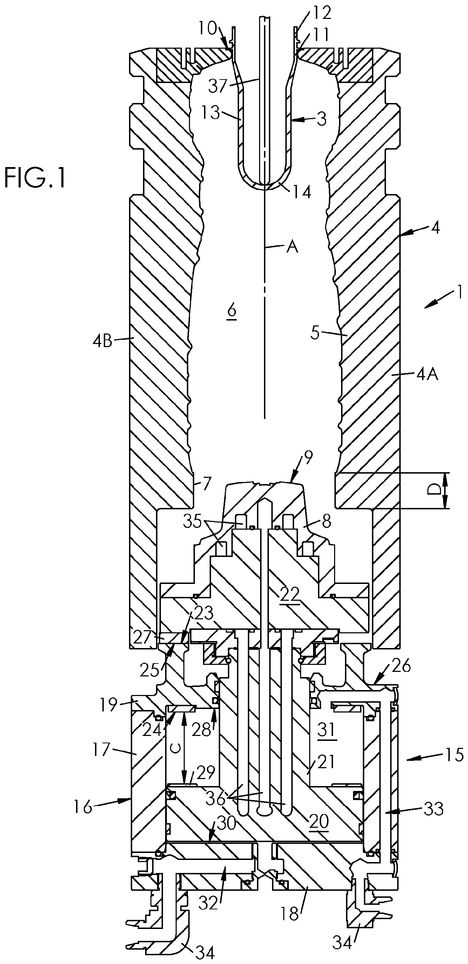

On a représenté sur les figures 1 à 3 une unité **1** de moulage pour la fabrication d'un récipient **2** par soufflage (ou étirage soufflage) à partir d'une ébauche **3** (en pratique, il s'agit d'une préforme, obtenue par injection) en matière plastique.

L'unité **1** de moulage comprend, en premier lieu, un moule **4.**

Ce moule **4** comprend une paroi **5** formée par deux demi-moules **4A, 4B** articulés, définissant une cavité **6** interne répartie autour d'un axe **A** principal du moule **4** qui, lorsque les récipients **2** à former sont symétriques de révolution, forme un axe de symétrie du moule **4.**

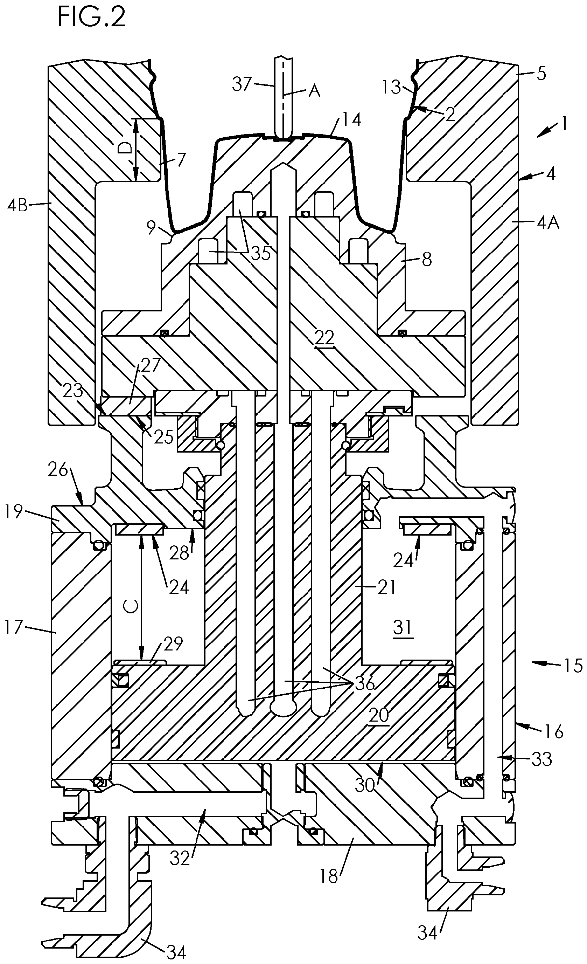

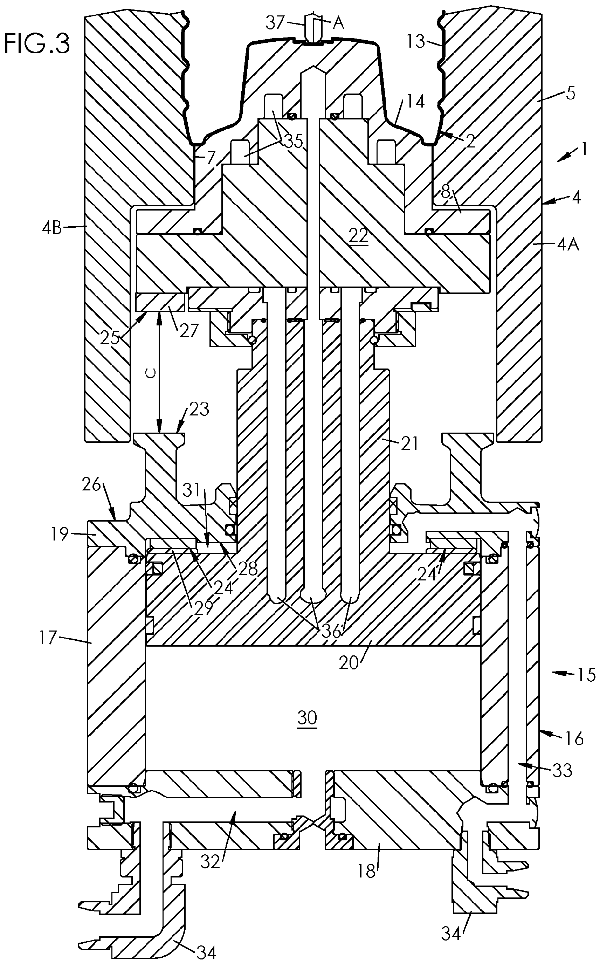

La cavité **6** définit partiellement une empreinte pour une paroi latérale ou corps du récipient **2.** La paroi **5** présente, dans une partie inférieure, une ouverture **7** définissant un passage pour un fond **8** de moule monté mobile par rapport à la paroi **5** entre une position rétractée (ou basse), illustrée sur les figures 1 et 2, dans laquelle le fond **8** de moule est écarté de l'ouverture **7** (et s'étend donc en retrait par rapport à la cavité **6)** vers le bas, et une position déployée (ou haute), illustrée sur la figure 3, dans laquelle le fond **8** de moule obture l'ouverture **7.**

Le fond **8** de moule présente une surface **9** supérieure définissant une empreinte pour un fond du récipient **2.** En position haute, le fond **8** de moule ferme la cavité **5,** complétant ainsi l'empreinte du récipient **2,** contre laquelle est appliquée la matière lors du soufflage. On appelle « course » du fond de moule, notée **C** sur la figure 2, la distance séparant sa position basse de sa position haute. Comme nous le verrons ci-après, cette course est supérieure (strictement) à 20 mm., Cette course **C** est également inférieure (ou égale) à 60 mm, voire inférieure ou égale 40 mm selon un mode particulier de réalisation.

L'ébauche **3,** puis le récipient **2** formé à partir de celle-ci, reposent sur une face **10** supérieure du moule **4** par l'intermédiaire d'une collerette **11** de l'ébauche **3** (respectivement du récipient **2),** qui délimite un col **12** de l'ébauche **3** (respectivement du récipient **2),** maintenu hors du moule **4.**

Sous la collerette **11,** l'ébauche **3** (puis le récipient **2)** présente un corps **13,** qui s'étend globalement suivant la direction axiale, et un fond **14,** qui est d'abord hémisphérique (figure 1), puis, une fois formé contre le fond **8** de moule (figure 3), s'étend globalement suivant la direction radiale à partir d'une extrémité inférieure du corps **13.**

L'unité de moulage comprend, en deuxième lieu, un vérin **15** de commande de la position du fond **8** de moule, et qui comprend un corps **16** de vérin muni d'une chemise **17** cylindrique, d'une paroi **18** inférieure et d'une paroi **19** supérieure fermant la chemise à chacune de ses extrémités, et d'un piston **20** monté coulissant dans la chemise entre les parois.

Comme cela est visible sur les figures 2 et 3, le piston **20** est solidaire d'une tige **21** traversant, de manière étanche, la paroi **19** supérieure au travers d'une ouverture complémentaire ménagée dans celle-ci.

Le fond **8** de moule est monté sur la tige **21,** à une extrémité supérieure de celle-ci faisant saillie hors du corps **16** de vérin, par l'intermédiaire d'une sellette **22.** La fixation du fond **8** de moule sur la sellette **22** (de même que celle de la sellette **22** sur la tige **21)** peut être réalisée de manière classique, par exemple par vissage.

Le piston **20** et la tige **21** sont solidairement mobiles par rapport au corps **16** de vérin entre une position rétractée, correspondant à la position rétractée du fond **8** de moule (figure 2), et une position déployée, correspondant à la position déployée du fond **8** de moule (figure 3).

L'unité de moulage comprend, en troisième lieu, deux butées définissant les positions extrêmes du fond **8** de moule, à savoir :
- une butée **23** basse de fin de course définissant la position rétractée du fond **8** de moule, et
- une butée **24** haute de fin de course, définissant la position déployée du fond **8** de moule.

Les butées **23, 24** peuvent être agencées pour venir en contact directement avec le fond **8** de moule, ou encore avec le piston **20.**

Selon un mode de réalisation, la butée **23** basse est disposée en regard d'une face **25** inférieure d'appui du fond **8** de moule, pour un contact avec celle-ci en position rétractée.

Ainsi, dans l'exemple illustré, la butée **23** basse est formée du côté d'une face **26** externe de la paroi **19** supérieure. Plus précisément, comme illustré sur la figure 2, la butée **23** basse est formée par une face d'extrémité axiale d'une bague annulaire formée en saillie sur la paroi **19** supérieure à partir de la face **26** externe de celle-ci.

Comme cela est visible sur la figure 3, la face **25** inférieure d'appui du fond **8** de moule peut être formée par un ou plusieurs tampons **27** rapportés, qui peuvent, outre la fonction de butée, procurer une fonction d'amortissement contribuant au silence de fonctionnement de l'unité **1** de moulage.

Par ailleurs, la butée **24** haute peut quant à elle être disposée en regard du piston **20,** pour un contact avec celui-ci en position déployée.

Ainsi, dans l'exemple illustré, la butée **24** haute est formée du côté d'une face **28** interne de la paroi **19** supérieure. Plus précisément, comme illustré sur la figure 3, la butée **24** haute est formée par une cale annulaire solidaire de la paroi **19** supérieure. Pour limiter l'usure du piston **20** au contact de la butée **24** haute, celui-ci peut porter une rondelle **29** qui vient s'appliquer contre la butée **24** haute en position déployée.

Comme on le voit sur les figures 2 et 3, le piston **20** divise le corps **16** en deux chambres fluidiques, à savoir une chambre **30** inférieure, délimitée par le piston **20** et la paroi **18** inférieure, et une chambre **31** supérieure, délimitée par le piston **20** et la paroi **19** supérieure.

Le déplacement du piston **20** est commandé par un circuit fluidique de commande comprenant :
- un conduit **32** aller raccordé à une source de fluide sous pression (air, eau, huile, etc.) par l'intermédiaire d'une électrovanne et débouchant dans la chambre **30** inférieure, et
- un conduit **33** retour raccordé à la source de fluide sous pression par l'intermédiaire d'une électrovanne et débouchant dans la chambre **31** supérieure.

Comme on le voit bien sur les figures 2 et 3, le conduit **32** aller est partiellement formé dans la paroi **18** inférieure ; quant au conduit **33** retour, il est partiellement formé dans la paroi **18** inférieure, dans la chemise **17** et dans la paroi **19** supérieure. Le raccord des conduits **32, 33** à des tubulures d'amenée du fluide peut être réalisé, comme dans l'exemple illustré, au moyen de connecteurs **34** rapportés et vissés sur la paroi **18** inférieure.

La température du fond **8** de moule peut avantageusement être régulée par circulation d'un fluide caloporteur dans un circuit **35** de régulation thermique formé partiellement dans le fond **8.** Comme on le voit sur les figures 2 et 3, des conduits **36** d'amenée et d'évacuation du fluide caloporteur peuvent être formés dans la sellette **22,** la tige **21** et le piston **20.**

Pour fabriquer le récipient **2** à partir d'une ébauche **3,** on procède comme suit.

Le moule **4** étant dans sa configuration illustrée sur les figures 1 et 2, avec le fond **8** de moule dans sa position basse, on y introduit l'ébauche **3** préalablement chauffée à une température supérieure à la température de transition vitreuse de la matière (environ 80°C dans le cas du PET).

On introduit alors dans l'ébauche **3,** par son col **12,** une tige **37** d'étirage mobile suivant la direction axiale ; dès que la tige **37** atteint le fond **14** de l'ébauche **3,** on initie le présoufflage, en injectant dans l'ébauche **3** un fluide (notamment de l'air) à une pression **P1** de présoufflage (inférieure à 15 bars, et par exemple de l'ordre de 7 à 12 bars).

La vitesse d'étirage et le débit d'air sont tels que la tige **37** d'étiage reste en contact avec le fond **14** de l'ébauche **3** tout au long du présoufflage.

Lorsque la tige **37** d'étirage atteint le fond **8** de moule en y plaquant le fond **14** du récipient en formation (figure 3), le fond **8** de moule se trouve toujours dans sa position basse.

La pression **P1** de présoufflage n'est pas suffisante pour plaquer la matière intimement contre la paroi **5** du moule **4,** et il est nécessaire d'injecter dans le récipient **2** en formation une pression **P2** de soufflage, supérieure à la pression **P1** de présoufflage (en pratique la pression P**2** de soufflage est égale ou supérieure à 15 bars, et par exemple de l'ordre de 20 à 30 bars).

Il se produit alors une montée brutale de la pression dans l'ébauche **3,** jusqu'à ce que cette pression soit égale à la pression **P2** de soufflage. Après une durée prédéterminée de maintien de la pression **P2** de soufflage dans le récipient **2** ainsi formé, on dépressurise celui-ci avant de l'évacuer.

Une opération de remontée du fond **8** de moule, dénommée boxage, est initiée avant l'opération de soufflage, de manière à conférer à la matière du fond **14** un surcroît de taux de déformation favorable à l'orientation des molécules (et donc à la rigidité) et à la prise d'empreinte sur la surface **9** supérieure du fond **8** de moule.

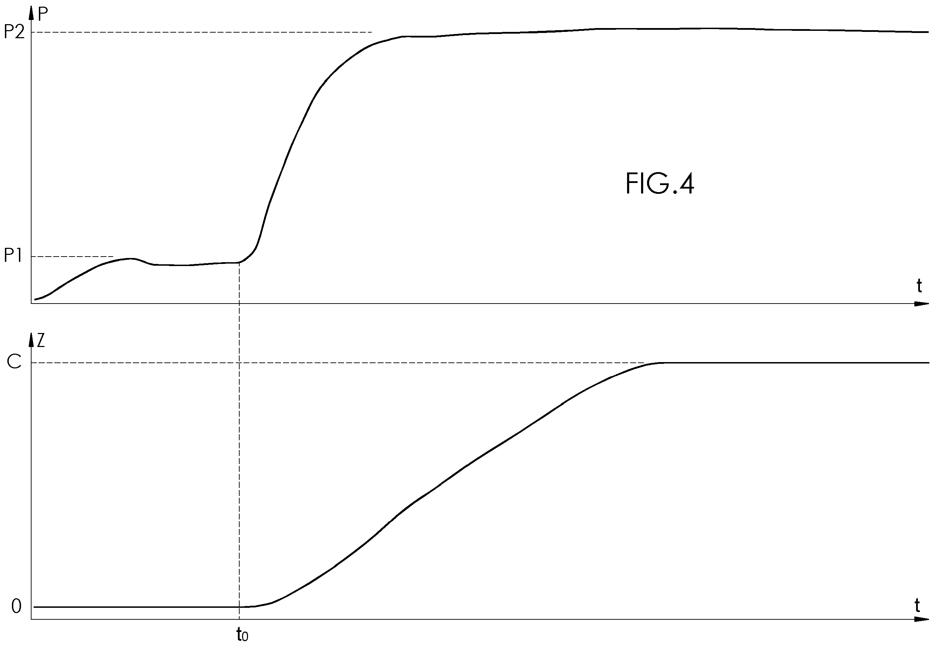

On a représenté sur la figure 4 les courbes représentant, en fonction du temps, noté t :
- en bas, la position axiale (ou hauteur), notée **Z,** du fond **8** de moule, en prenant pour origine (Z=0) la position rétractée ;
- au haut, la pression, notée **P**, régnant dans l'ébauche **3** (ou le récipient **2)** en cours de formage.

Les courbes sont synchronisées sur l'axe de temps qui leur est commun, les traits pointillés horizontaux permettant de situer les valeurs **P1, P2** des pressions de présoufflage et soufflage évoquées, ainsi que les positions extrêmes (Z=0, Z=C) du fond **8** de moule, le trait pointillé vertical permettant quant à lui d'effectuer une mise en correspondance des courbes à un instant, noté **10,** où est initié le boxage.

Comme nous l'avons vu, la course **C** est supérieure à 20 mm. Cette course, importante, permet à la matière de se déployer très au-delà des limites de la cavité **6** lors de la phase de présoufflage, comme illustré sur la figure 2, et donc de permettre une bonne prise d'empreinte du fond **14,** notamment lorsque celui-ci présente une forme complexe.

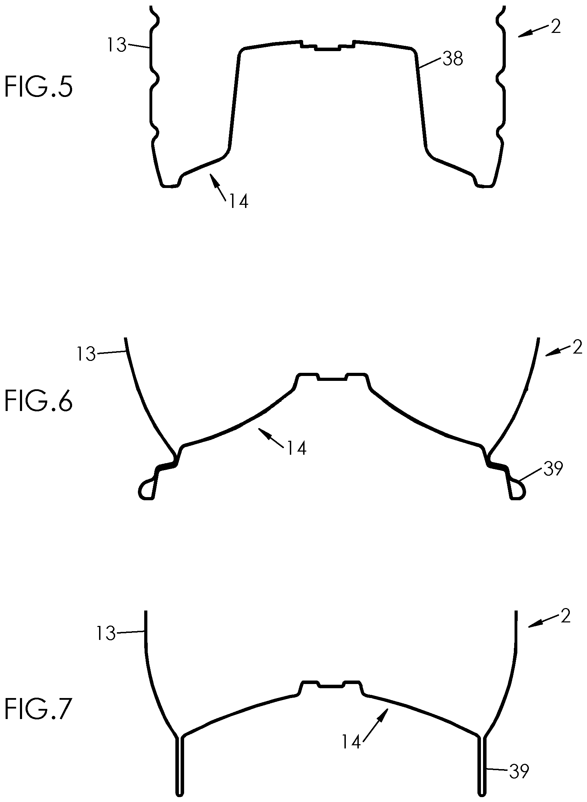

On a représenté sur les figures 5, 6 et 7 trois fonds **14** de récipients (vus en coupe) illustrant chacun différemment la notion de complexité évoquée ci-dessus.

Le fond **14** de la figure 5, similaire à celui que l'on voit sur la figure 3 au sein du moule **4,** présente ainsi un pion **38** central de grande hauteur (au regard du diamètre du fond **14),** destiné par exemple à permettre l'empilement du récipient **2** en accueillant le col d'un récipient **2** similaire sous-jacent.

Les fonds **14** des figures 6 et 7 comprennent chacun une assise **39** en saillie à partir d'une extrémité inférieure du corps **13.** L'assise **39** représentée sur la figure 6 présente des replis ; l'assise **39** représentée sur la figure 7 est étroite et présente une extension axiale importante au regard du diamètre du fond **14.**

Les essais démontrent que ces fonds **14** sont mieux formés par le procédé décrit ci-dessus que par un procédé ordinaire dans lequel la course de boxage est inférieure à 20 mm. Ainsi ce procédé permet d'améliorer la prise d'empreinte au moins des fonds munis d'un pion central et/ou d'une assise étroite et de grande hauteur.

De manière subsidiaire, la course **C** importante permet de procurer à la matière constitutive du fond **14** un taux d'étirage important favorable à la rigidité structurelle finale du fond **14.**

On limite les risques de pincement de la matière entre la paroi **5** et le fond **8** de moule en initiant le boxage avant d'initier le soufflage. En outre, l'ouverture **7** présente une extension **D** axiale relativement importante (supérieure ou égale à 20 mm), ce qui contribue également à limiter les risques de pincement.

Lorsque le boxage est réalisé de manière que le fond **8** de moule atteigne sa position haute avant la fin du soufflage, la vitesse de déplacement du fond **8** de moule est sensiblement constante pendant tout le boxage, ce dont témoigne le caractère quasi linéaire de la section variable de la courbe illustrant la position **Z** du fond **8** de moule.

L'expérience montre par ailleurs que les bénéfices d'une grande course **C** de déplacement du fond **8** de moule plafonnent à partir de 60 mm, d'où la proposition de cette limite supérieure.

## Revendications

1. Procédé de fabrication d'un récipient **(2)** à partir d'une ébauche **(3)** en matière plastique, au sein d'un moule **(4)** muni d'une paroi **(5)** définissant une cavité **(6)** à l'empreinte du récipient **(2),** et d'un fond **(8)** de moule mobile par rapport à la paroi **(5)** entre une position rétractée dans laquelle il s'étend en retrait par rapport à la cavité **(6),** et une position déployée dans laquelle il ferme la cavité (**6**), la paroi **(5)** présentant, dans une partie inférieure, une ouverture **(7)** définissant un passage pour le fond **(8)** de moule, ce procédé comprenant :
- une phase d'introduction de l'ébauche **(3)** dans le moule **(4)** ;
- une phase de présoufflage comprenant l'injection dans l'ébauche **(3)** d'un fluide sous pression à une pression **(P1)** dite de présoufflage,
- une phase de soufflage, consécutive à la phase de présoufflage, et comprenant l'injection dans l'ébauche **(3)** d'un fluide sous pression à une pression **(P2)** dite de soufflage supérieure à la pression **(P1)** de présoufflage ;
- une phase de boxage comprenant le déplacement du fond **(8)** de moule de sa position rétractée vers sa position déployée ;
ce procédé étant **caractérisé en ce que** la course **(C)** de déplacement du fond **(8)** de moule entre sa position rétractée et sa position déployée est supérieure à 20 mm et inférieure ou égale à 60 mm,
l'ouverture **(7)** présentant une extension **(D)** axiale supérieure ou égale à 20 mm.

2. Procédé selon la revendication 1, **caractérisé en ce que** la phase de boxage est initiée avant la phase de soufflage.

3. Unité **(1)** de moulage pour la fabrication d'un récipient **(2)** à partir d'une ébauche **(3)** en matière plastique, cette unité **(1)** de moulage comprenant :
- un moule **(4)** muni d'une paroi **(5)** définissant une cavité **(6)** à l'empreinte du récipient **(2),** et d'un fond **(8)** de moule mobile par rapport à la paroi **(5)** entre une position rétractée dans laquelle il s'étend en retrait par rapport à la cavité **(6),** et une position déployée dans laquelle il ferme la cavité **(6),** la paroi **(5)** présentant, dans une partie inférieure, une ouverture **(7)** définissant un passage pour le fond **(8)** de moule,
- une butée **(23)** basse de fin de course définissant la position rétractée du fond **(8)** de moule, et une butée **(24)** haute de fin de course définissant la position déployée du fond **(8)** de moule ;
cette unité **(1)** de moulage étant **caractérisée en ce que** la course **(C)** de déplacement du fond **(8)** de moule définie par les butées **(23, 24)** est supérieure à 20 mm, inférieure ou égale à 60 mm,
l'ouverture **(7)** présentant une extension **(D)** axiale supérieure ou égale à 20 mm.

4. Unité **(1)** de moulage selon la revendication 3, **caractérisée en ce qu'**elle comprend un vérin **(15)** muni d'un corps **(16)** de vérin, d'un piston **(20)** et d'une tige **(21)** solidaire du piston **(20)** et sur laquelle est monté le fond **(8)** de moule, la tige **(21)** et le piston **(20)** étant solidairement mobiles par rapport au corps **(16)** de vérin entre une position rétractée correspondant à la position rétractée du fond **(8)** de moule, et une position déployée correspondant à la position déployée du fond **(8)** de moule.

5. Unité **(1)** de moulage selon la revendication 4, **caractérisée en ce que** la butée **(23)** basse est disposée en regard d'une face **(25)** inférieure d'appui du fond **(8)** de moule, pour un contact avec celle-ci en position rétractée.

6. Unité **(1)** de moulage selon la revendication 5, **caractérisée en ce que** la butée **(23)** basse est formée du côté d'une face **(26)** externe d'une paroi **(19)** supérieure du corps **(16)** de vérin.

7. Unité **(1)** de moulage selon l'une de revendications 4 à 6, **caractérisée en ce que** la butée **(24)** haute est disposée en regard du piston **(20),** pour un contact avec celui-ci en position déployée.

8. Unité **(1)** de moulage selon la revendication 7, **caractérisée en ce que** la butée **(24)** haute est formée du côté d'une face **(28)** interne d'une paroi **(19)** supérieure du corps **(16)** de vérin.

## Patentansprüche

1. Verfahren zur Herstellung eines Behälters (2) aus einem Rohling (3) aus Kunststoff innerhalb einer Form (4), die mit einer Wand (5) ausgestattet ist, die einen Hohlraum (6) mit dem Abdruck des Behälters (2) definiert, und mit einem Formboden (8), der in Bezug auf die Wand (5) zwischen einer eingefahrenen Stellung, in der er sich in Bezug auf den Hohlraum (6) zurückgesetzt erstreckt, und einer ausgefahrenen Stellung, in der er den Hohlraum (6) verschließt, bewegbar ist, wobei die Wand (5) in einem unteren Teil eine Öffnung (7) aufweist, die einen Durchgang für den Boden (8) der Form definiert, wobei das Verfahren Folgendes umfasst:
- eine Phase des Einführens des Rohlings (3) in die Form (4);
- eine Vorblasphase, die das Einspritzen eines Druckfluids mit einem als Vorblasdruck bezeichneten Druck (P1) in den Rohling (3) umfasst,
- eine Blasphase, die auf die Vorblasphase folgt und das Einspritzen eines Druckfluids mit einem als Blasdruck bezeichneten Druck (P2), der höher als der Vorblasdruck (P1) ist, in den Rohling (3) umfasst;
- eine Boxphase, die das Bewegen des Formbodens (8) aus seiner eingefahrenen Stellung in seine ausgefahrene Stellung umfasst;
wobei das Verfahren **dadurch gekennzeichnet ist, dass** der Bewegungshub (C) des Formbodens (8) zwischen seiner eingefahrenen Stellung und seiner ausgefahrenen Stellung größer als 20 mm und kleiner als oder gleich 60 mm ist, wobei die Öffnung (7) eine axiale Erstreckung (D) von 20 mm oder mehr aufweist.

2. Verfahren nach Anspruch 1, **dadurch gekennzeichnet, dass** die Boxphase vor der Blasphase eingeleitet wird.

3. Formeinheit (1) zur Herstellung eines Behälters (2) aus einem Rohling (3) aus Kunststoff, wobei die Formeinheit (1) Folgendes umfasst:
- eine Form (4), die mit einer Wand (5) ausgestattet ist, die einen Hohlraum (6) mit dem Abdruck des Behälters (2) definiert, und mit einem Formboden (8), der in Bezug auf die Wand (5) zwischen einer eingefahrenen Stellung, in der er sich in Bezug auf den Hohlraum (6) zurückgesetzt erstreckt, und einer ausgefahrenen Stellung, in der er den Hohlraum (6) verschließt, bewegbar ist, wobei die Wand (5) in einem unteren Teil eine Öffnung (7) aufweist, die einen Durchgang für den Formboden (8) definiert,
- einen unteren Endanschlag (23), der die eingefahrene Stellung des Formbodens (8) definiert, und einen oberen Endanschlag (24), der die ausgefahrene Stellung des Formbodens (8) definiert;
wobei die Formeinheit (1) **dadurch gekennzeichnet ist, dass** der durch die Anschläge (23, 24) definierte Bewegungshub (C) des Formbodens (8), größer als 20 mm und kleiner als oder gleich 60 mm ist, wobei die Öffnung (7) eine axiale Erstreckung (D) von 20 mm oder mehr aufweist.

4. Formeinheit (1) nach Anspruch 3, **dadurch gekennzeichnet, dass** sie einen Zylinder (15) umfasst, der mit einem Zylinderkörper (16), einem Kolben (20) und einer fest mit dem Kolben (20) verbundenen Stange (21), an der der Formboden (8) montiert ist, versehen ist, wobei die Stange (21) und der Kolben (20) gemeinsam in Bezug auf den Zylinderkörper (16) zwischen einer eingefahrenen Stellung, die der eingefahrenen Stellung des Formbodens (8) entspricht, und einer ausgefahrenen Stellung, die der ausgefahrenen Stellung des Formbodens (8) entspricht, bewegbar sind.

5. Formeinheit (1) nach Anspruch 4, **dadurch gekennzeichnet, dass** der untere Anschlag (23) gegenüber einer unteren Auflagefläche (25) des Formbodens (8) angeordnet ist, für einen Kontakt mit dieser in der eingefahrenen Stellung.

6. Formeinheit (1) nach Anspruch 5, **dadurch gekennzeichnet, dass** der untere Anschlag (23) auf der Seite einer Außenfläche (26) einer oberen Wand (19) des Zylinderkörpers (16) ausgebildet ist.

7. Formeinheit (1) nach einem der Ansprüche 4 bis 6, **dadurch gekennzeichnet, dass** der obere Anschlag (24) gegenüber dem Kolben (20) angeordnet ist, für einen Kontakt mit diesem in der ausgefahrenen Stellung.

8. Formeinheit (1) nach Anspruch 7, **dadurch gekennzeichnet, dass** der obere Anschlag (24) auf der Seite einer Innenfläche (28) einer oberen Wand (19) des Zylinderkörpers (16) ausgebildet ist.

## Claims

1. Method for manufacturing a container **(2)** from a blank **(3)** made of plastics material, within a mould **(4)** provided with a wall **(5)** defining a cavity **(6)** with the imprint of the container **(2),** and with a mould bottom **(8)** that is able to move with respect to the wall **(5)** between a retracted position in which it extends set back from the cavity **(6),** and a deployed position in which it closes the cavity **(6),** the wall **(5)** having, in a lower part, an opening **(7)** defining a passage for the mould bottom **(8),** this method comprising:
- a phase of introducing the blank **(3)** into the mould **(4)** ;
- a pre-blowing phase comprising the injection into the blank **(3)** of a pressurized fluid at a pressure **(P1)** called pre-blowing pressure,
- a blow-moulding phase, following the pre-blowing phase, and comprising the injection into the blank **(3)** of a pressurized fluid at a pressure **(P2)** called blow-moulding pressure greater than the pre-blowing pressure **(P1);**
- a boxing phase comprising the movement of the mould bottom **(8)** from its retracted position towards its deployed position;
this method being **characterized in that** the movement travel **(C)** of the mould bottom **(8)** between its retracted position and its deployed position is greater than 20 mm and less than or equal to 60 mm,
the opening **(7)** having an axial extension **(D)** greater than or equal to 20 mm.

2. Method according to Claim 1, **characterized in that** the boxing phase is initiated before the blow-moulding phase.

3. Moulding unit **(1)** for the manufacture of a container **(2)** from a blank **(3)** made of plastics material, this moulding unit **(1)** comprising:
- a mould **(4)** provided with a wall **(5)** defining a cavity **(6)** with the imprint of the container **(2),** and with a mould bottom **(8)** that is able to move with respect to the wall **(5)** between a retracted position in which it extends set back from the cavity **(6),** and a deployed position in which it closes the cavity **(6),** the wall **(5)** having, in a lower part, an opening **(7)** defining a passage for the mould bottom **(8),**
- a bottom end-of-travel stop **(23)** defining the retracted position of the mould bottom **(8),** and a top end-of-travel stop **(24)** defining the deployed position of the mould bottom **(8);**
this moulding unit **(1)** being **characterized in that** the movement travel (C) of the mould bottom **(8),** defined by the stops **(23, 24),** is greater than 20 mm, less than or equal to 60 mm,
the opening **(7)** having an axial extension **(D)** greater than or equal to 20 mm.

4. Moulding unit **(1)** according to Claim 3, **characterized in that** it comprises a ram **(15)** provided with a ram body **(16),** with a piston **(20)** and with a rod **(21)** as one with the piston **(20)** and on which the mould bottom **(8)** is mounted, the rod **(21)** and the piston **(20)** being able to move as one with respect to the ram body **(16)** between a retracted position corresponding to the retracted position of the mould bottom **(8),** and a deployed position corresponding to the deployed position of the mould bottom **(8).**

5. Moulding unit **(1)** according to Claim 4, **characterized in that** the bottom stop **(23)** is disposed facing a lower bearing face **(25)** of the mould bottom **(8),** for contact therewith in the retracted position.

6. Moulding unit **(1)** according to Claim 5, **characterized in that** the bottom stop **(23)** is formed on the side of an external face **(26)** of an upper wall **(19)** of the ram body **(16).**

7. Moulding unit **(1)** according to one of Claims 4 to 6, **characterized in that** the top stop **(24)** is disposed facing the piston **(20),** for contact therewith in the deployed position.

8. Moulding unit **(1)** according to Claim 7, **characterized in that** the top stop **(24)** is formed on the side of an internal face **(28)** of an upper wall **(19)** of the ram body **(16)** .
